(19) Europäisches Patentamt / European Patent Office / Office européen des brevets

(11) **EP 1 416 254 B1**

(12) **EUROPEAN PATENT SPECIFICATION**

(45) Date of publication and mention
of the grant of the patent:
**01.02.2017 Bulletin 2017/05**

(51) Int Cl.:
**G01D 5/243** (2006.01)    **G01D 5/20** (2006.01)

(21) Application number: **03025002.1**

(22) Date of filing: **30.10.2003**

(54) **Rotation angle detecting device and electric rotary machine**

Drehwinkelsensor und rotierende elektrische Maschine

Détecteur d'angle de rotation et machine électrique tournante

(84) Designated Contracting States:
**DE FR GB**

(30) Priority: **01.11.2002 JP 2002319178**

(43) Date of publication of application:
**06.05.2004 Bulletin 2004/19**

(73) Proprietor: **MITSUBISHI DENKI KABUSHIKI KAISHA**
**Chiyoda-ku**
**Tokyo 100-8310 (JP)**

(72) Inventors:
• **Nakano, Masatsugu,**
**Mitsubishi Denki K.K.**
**Chiyoda-ku**
**Tokyo 100-8310 (JP)**
• **Nishimura, Shinji,**
**Mitsubishi Denki K.K.**
**Chiyoda-ku**
**Tokyo 100-8310 (JP)**

(74) Representative: **Hoffmann Eitle**
**Patent- und Rechtsanwälte PartmbB**
**Arabellastraße 30**
**81925 München (DE)**

(56) References cited:
**EP-A- 0 802 398     GB-A- 900 600**
**JP-A- 49 124 508     US-A- 4 481 440**

• **PATENT ABSTRACTS OF JAPAN vol. 1996, no. 11, 29 November 1996 (1996-11-29) -& JP 08 178610 A (TAMAGAWA SEIKI CO LTD), 12 July 1996 (1996-07-12) & JP 03 103487 B2 30 October 2000 (2000-10-30)**
• **PATENT ABSTRACTS OF JAPAN vol. 013, no. 534 (E-852), 29 November 1989 (1989-11-29) & JP 01 218344 A (TOSHIBA CORP), 31 August 1989 (1989-08-31) -& JP 02 624747 B 25 June 1997 (1997-06-25)**
• **PATENT ABSTRACTS OF JAPAN vol. 006, no. 152 (P-134), 12 August 1982 (1982-08-12) & JP 57 070406 A (S G:KK), 30 April 1982 (1982-04-30) -& JP 62 058445 B 5 December 1987 (1987-12-05)**

**Description**

BACKGROUND OF THE INVENTION

1. Field of the Invention

The present invention relates to a rotation angle detecting device. In particular, the invention relates to a rotation angle detecting device utilizing a variation in the permeance of the gap between a rotor and a stator that is an iron core having teeth.

2. Description of Related Art

In contrast to optical encoders that are complex in structure and expensive and are restricted in use temperature, rotation angle detecting devices utilizing the permeance of the gap between a rotor and a stator are known as devices that are simple in structure and inexpensive and can withstand high-temperature environments.

Among those rotation angle detecting devices are ones having two-phase energization windings and a one-phase output winding (refer to JP-B-62-58445 (patent document-1, pages 2-3, Fig. 1), for example) and ones having a one-phase energization winding and two-phase output windings (refer to JP-A-49-124508 (patent document-2; page 2, Fig. 1), for example).

In either of the above examples, the rotor has projected poles. Therefore, the phase or amplitude of the voltage across the output winding (s) varies depending on the angle of the rotor. The position of the rotor can be detected by reading that variation.

Also known are rotation angle detecting devices having three-phase energization windings (refer to Japanese Patent No. 2, 624, 747 (patent document-3; page 3, Fig. 1), for example) and rotation angle detecting devices in which windings are wound in a concentrated manner on the teeth of the stator in such a manner that the number of turns is varied sinusoidally (refer to Japanese Patent Nos. 3,103,487 (patent document-4) and 3,182,493 (patent document-5), for example).

However, the above conventional examples have the following problems.

With the winding structure of patent document-1 and patent document-2, as the shaft multiple angle (referred to as Number of multiple, herein after) increases, the number of teeth of the stator increases in proportion to it to lower the windability and workability.

In each of the examples of patent document-1 and patent document-2, the Number of multiple is one and the number of teeth of the stator is four. If the Number of multiple is changed to two or four, for example, the number of teeth becomes eight or 16. If the Number of multiple is changed to eight, the number of teeth amounts to as large as 32. Motors or the like having a large number poles may require a rotation angle detecting device having a large Number of multiple. The conventional examples of patent document-1 and patent document-2 are unrealistic in structure in terms of mass-productivity when the Number of multiple is large.

The structure of patent document-3 in which the one-phase output winding and the three-phase energization windings are employed is associated with a production-related problem that winding work takes long time and a problem that an expensive power source is required for the energization windings.

The examples of patent document-4 and patent document-5 enable automatic machine winding because the windings are wound in a concentrated manner on the teeth of the stator.

However, since the number of turns is varied sinusoidally, there are teeth having only a small number of turns. The nozzle of an automatic winding machine should be moved close to each of the teeth that should be given only a small number of turns. Since the nozzle positioning takes considerable time, the efficiency of winding work is low.

Since the number of turns is varied sinusoidally, only one of magnetic flux components of various spatial orders occurring in the gap of the rotation angle detecting device can be detected, resulting in low output voltages.

Varying the number of turns sinusoidally has a side effect that the two-phase output windings are different in the sum of the numbers of turns of the respective teeth and hence they are different also in winding resistance. The winding resistance values of the two-phase output windings vary differently with respect to the temperature, which is a problem from the viewpoint of the detection circuit side.

SUMMARY OF THE INVENTION

An object of the present invention is to provide a rotation angle detecting device which is highly accurate and superior in mass-productivity and in which the output voltages can be made relatively high, the position detection error can be made small, and the number of teeth of the stator can be kept small even if the Number of multiple is increased.

The invention provides a rotation angle detecting device comprising a stator that is an iron core having teeth and is provided with a one-phase energization winding and two-phase output windings; and a rotor having projected poles, wherein when the number of pole pairs of the energization winding is represented by N and the number of projected poles of the rotor is represented by M, 2N is different from the number of teeth of the stator and the numbers of turns of the two-phase output windings are given by functions each of which is a sum of or a difference between sinusoidal waves of a |N + M|th order spatial harmonic and a |N - M|th order spatial harmonic.

More specifically, the numbers $N_{\alpha i}$ and $N_{\beta i}$ of turns of ith teeth of an $\alpha$-phase winding and a $\beta$-phase winding as the two-phase output windings are given by:

$$N_{\alpha i} = N_1 \cos\{(M - N) \times 2(i - 1)\pi/N_s + \theta\}$$

$$+ N_2 \cos\{(M + N) \times 2(i - 1)\pi/N_s + \theta + \xi\}$$

$$N_{\beta i} = N_1 \sin\{(M - N) \times 2(i - 1)\pi/N_s + \theta\}$$

$$+ N_2 \sin\{(M + N) \times 2(i - 1)\pi/N_s + \theta + \xi\}$$

where $N_s$ is the number of teeth of the stator and $N_1$, $N_2$, $\theta$, and $\xi$ are arbitrary constants.

BRIEF DESCRIPTION OF THE DRAWINGS

Fig. 1 is a horizontal sectional view showing the structure of a rotation angle detecting device (number of teeth: 12; Number of multiple: 8) according to a first embodiment of the present invention;
Fig. 2 is a table showing the numbers of turns of conventional windings (sinusoidal windings);
Fig. 3 is a graph showing the numbers of turns of the conventional windings of Fig. 2;
Fig. 4 is a table showing the numbers of turns of exemplary windings according to the first embodiment.;
Fig. 5 is a graph showing the numbers of turns of the windings of Fig. 4;
Fig. 6 is a graph comparing output voltage waveforms of the first embodiment with those of the conventional example;
Fig. 7 is a graph showing characteristics that were obtained when the phase difference between a 5th spatial order winding and a 11th spatial order winding was varied in the first embodiment;
Fig. 8 is a graph showing a gap magnetic flux density waveform in the first embodiment;
Fig. 9 is a graph showing a frequency analysis result of the gap magnetic flux density waveform in the first embodiment;
Fig. 10 is a table showing a phase difference between a 5th order spatial harmonic component and a 11th order spatial harmonic component in the first embodiment;
Fig. 11 is a graph comparing an output voltage value of the first embodiment with output voltage values of conventional examples;
Fig. 12 is a graph comparing a position detection error of the first embodiment with position detection errors of the conventional examples;
Fig. 13 is tables showing other winding specifications according to the first embodiment in which the sums of the numbers of turns of two-phase output windings are the same;
Fig. 14 is a graph showing a variation of the position detection error due to eccentricity in each of the first embodiment and a conventional example;
Fig. 15 shows how magnetomotive force of the 0th order spatial harmonic is generated in the first embodiment;
Figs. 16A and 16B are graphs showing influence of magnetomotive force of the 0th order spatial harmonic on an output voltage in the first embodiment and a conventional example;
Fig. 17 is a graph showing how a characteristic of the rotation angle detecting device according to the first embodiment varies with respect to $N_1/N_2$;
Fig. 18 is a horizontal sectional view showing the structure of a rotation angle detecting device (number of teeth: 12; Numberof multiple: 4) according to a second embodiment of the invention;
Fig. 19 is a table showing an exemplary winding specification (number of teeth: 12; Number of multiple: 4) according to the second embodiment;
Fig. 20 is a graph showing output voltage waveforms of the second embodiment (number of teeth: 12; Number of multiple: 4) ;
Fig. 21 is a horizontal sectional view showing the structure of a rotation angle detecting device (number of teeth: 12; Number of multiple: 5) according to a third embodiment of the invention;

Fig. 22 is a table showing an exemplary winding specification (number of teeth: 12; Number of multiple: 5) according to the third embodiment;

Fig. 23 is a graph showing output voltage waveforms (number of teeth: 12; Number of multiple: 5) of the third embodiment;

Fig. 24 is a horizontal sectional view showing the structure of a rotation angle detecting device (number of teeth: 12; Number of multiple: 1) according to a fourth embodiment of the invention;

Fig. 25 is a table showing an exemplary winding specification (number of teeth: 12; Number of multiple: 1) according to the fourth embodiment;

Fig. 26 is a graph showing output voltage waveforms (number of teeth: 12; Number of multiple: 1) of the fourth embodiment;

Fig. 27 is a horizontal sectional view showing the structure of a rotation angle detecting device (number of teeth: 9; Number of multiple: 8) according to a fifth embodiment of the invention;

Fig. 28 is a table showing an exemplary winding specification (number of teeth: 9; Number of multiple: 8) according to the fifth embodiment;

Fig. 29 is a graph showing output voltage waveforms of the fifth embodiment (number of teeth: 9; Number of multiple: 8) ;

Fig. 30 is a vertical sectional view showing an example in which a rotation angle detecting device according to the invention is applied to a generator having a claw-shaped field iron core (sixth embodiment);

Fig. 31 is a horizontal sectional view of a conventional example (Number of multiple: 1; number of teeth: 4); and

Fig. 32 is a horizontal sectional view of another conventional example (Number of multiple: 4; number of teeth: 16) in which the number of teeth is increased with the Number of multiple.

## DESCRIPTION OF THE PREFERRED EMBODIMENTS

Embodiment 1 (number of teeth: 12; shaft multiple angle: 8)

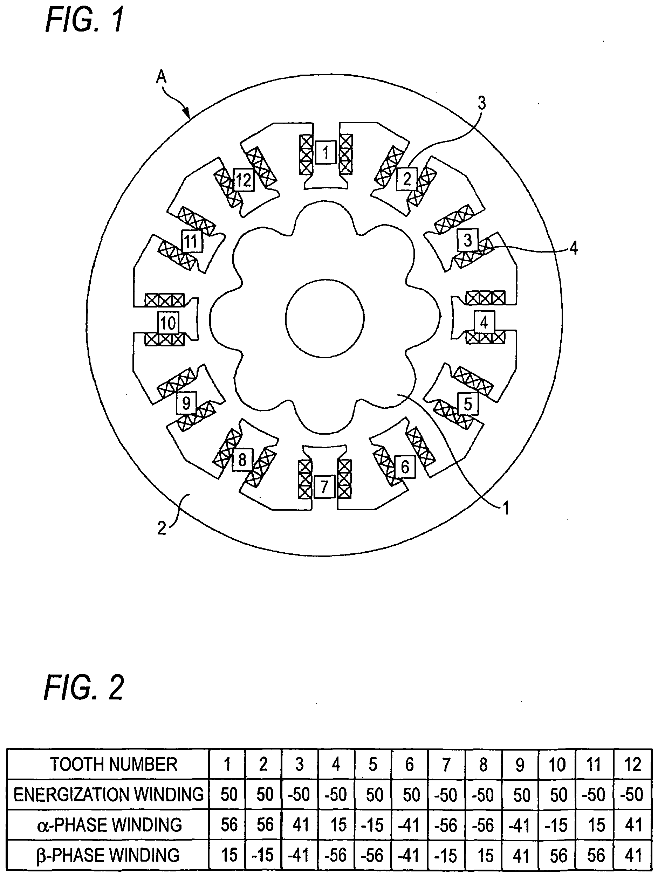

A first embodiment of the present invention will be described below with reference to Figs. 1-17.

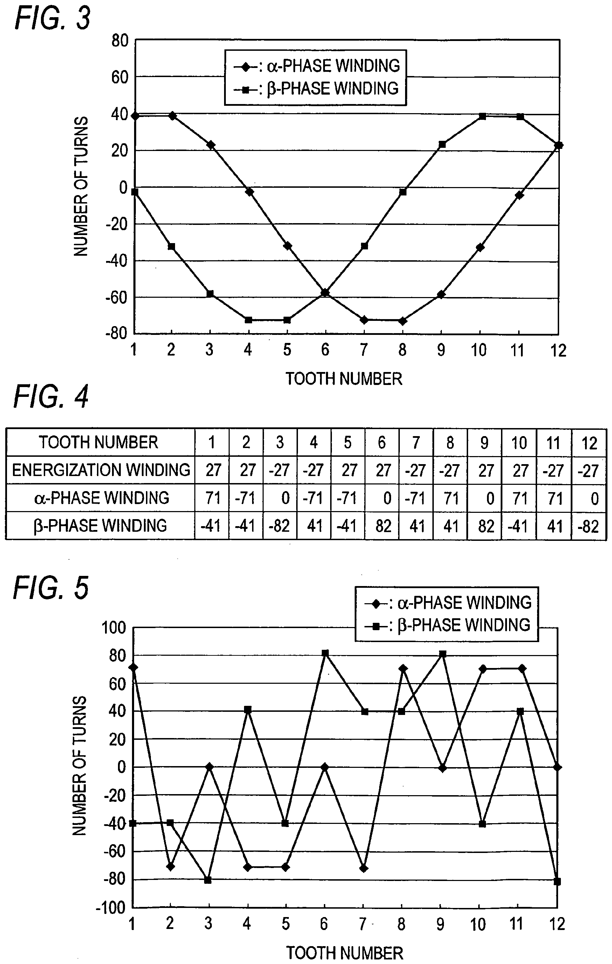

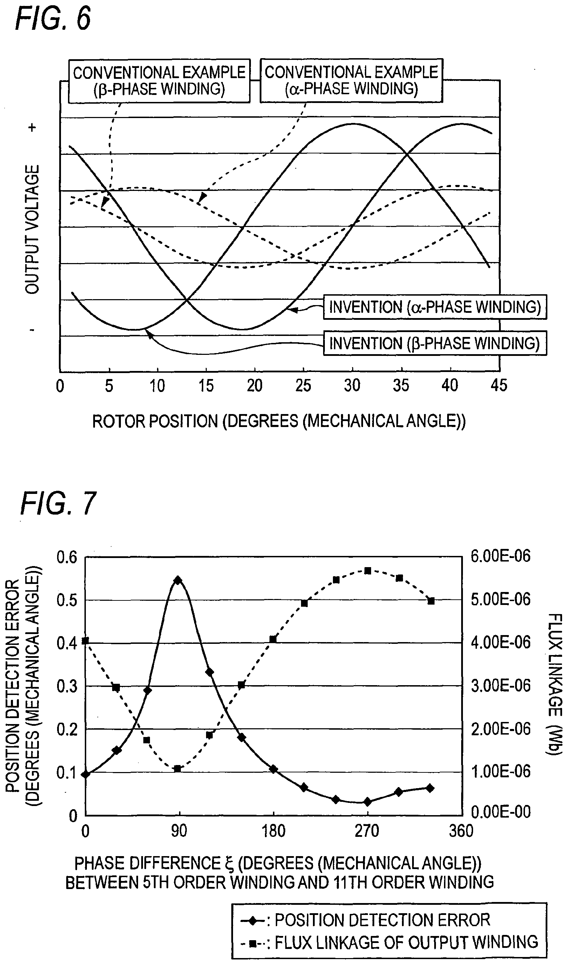

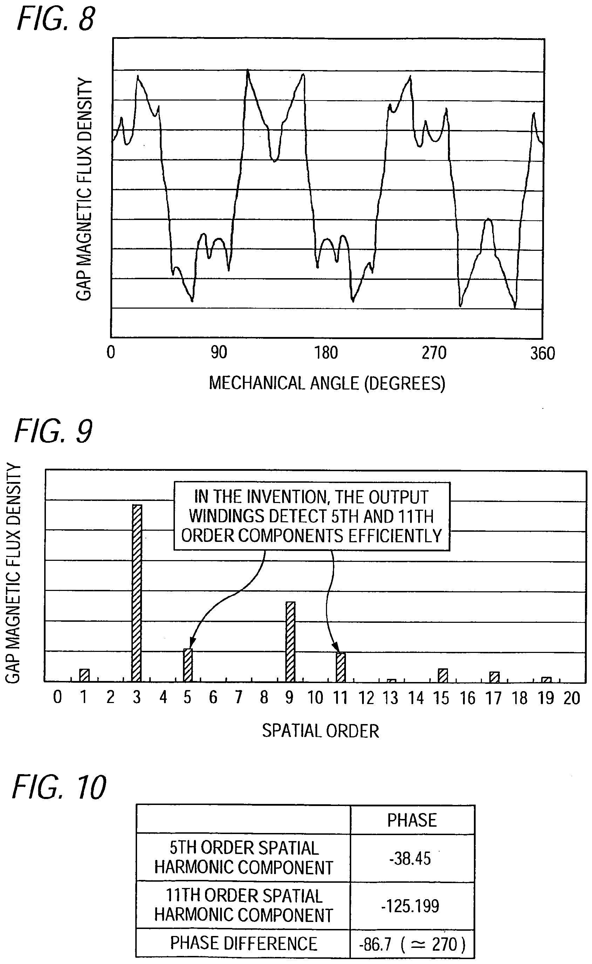

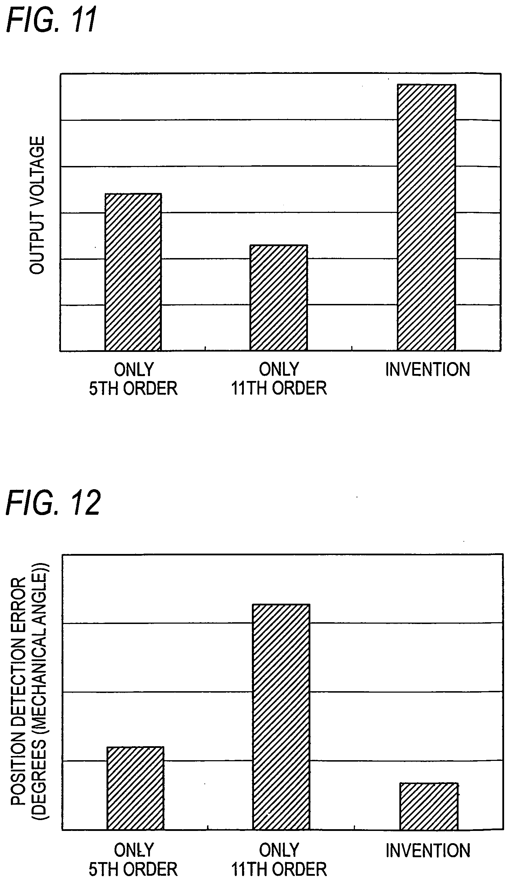

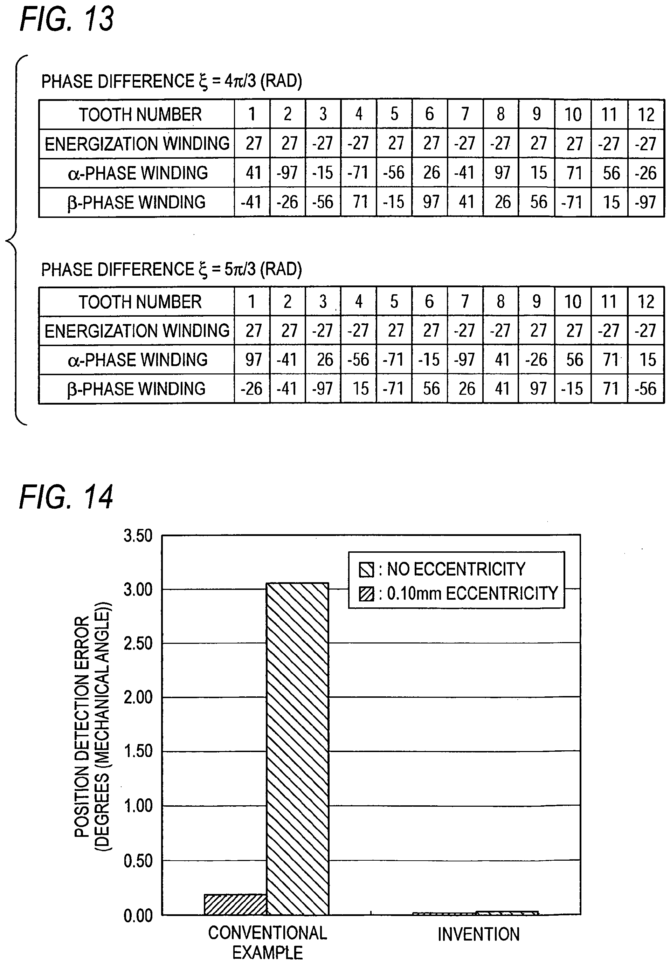

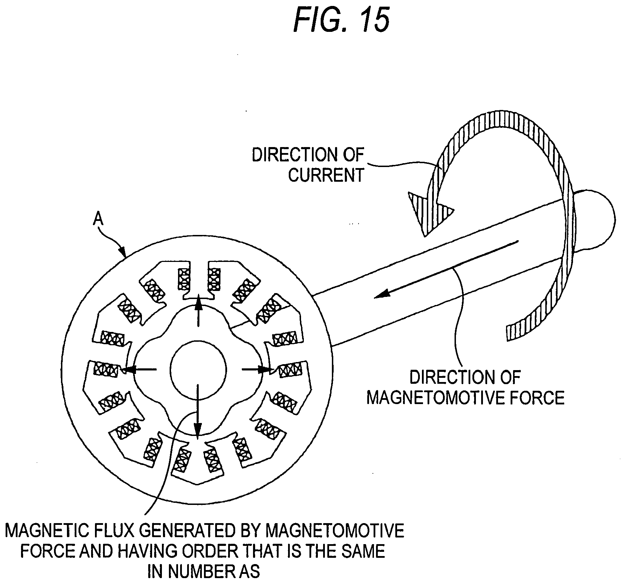

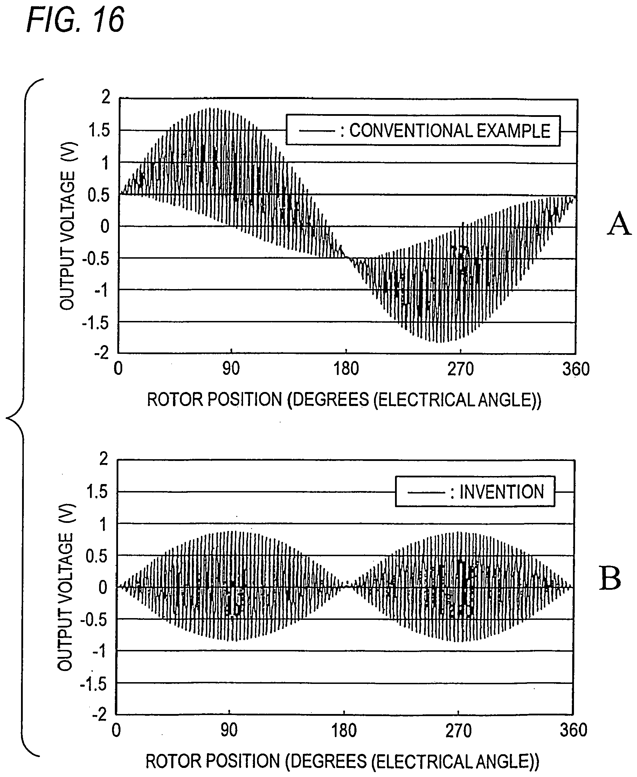

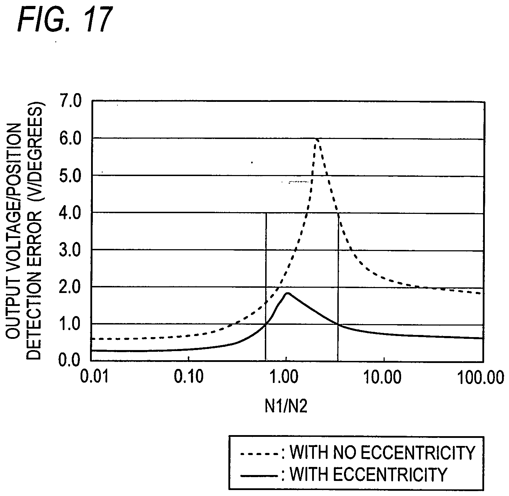

Fig. 1 is a horizontal sectional view showing the structure of a rotation angle detecting device (number of teeth: 12; Number of multiple: 8) according to the first embodiment. Fig. 2 is a table showing the numbers of turns of conventional windings (sinusoidal windings). Fig. 3 is a graph showing the numbers of turns of the conventional windings of Fig. 2. Fig. 4 is a table showing the numbers of turns of exemplary windings according to the first embodiment. Fig. 5 is a graph showing the numbers of turns of the windings of Fig. 4. Fig. 6 is a graph comparing output voltage waveforms of the first embodiment with those of the conventional example. Fig. 7 is a graph showing characteristics that were obtained when the phase difference between a 5th spatial order winding and a 11th spatial order winding was varied in the first embodiment. Fig. 8 is a graph showing a gap magnetic flux density waveform in the first embodiment. Fig. 9 is a graph showing a frequency analysis result of the gap magnetic flux density waveform of Fig. 8. Fig. 10 is a table showing a phase difference between a 5th order spatial harmonic component and a 11th order spatial harmonic component in Fig. 9. Fig. 11 is a graph comparing an output voltage value of the first embodiment with output voltage values of conventional examples. Fig. 12 is a graph comparing a position detection error of the first embodiment with position detection errors of the conventional examples. Fig. 13 is tables showing other winding specifications according to the first embodiment in which the sums of the numbers of turns of two-phase output windings are the same. Fig. 14 is a graph showing a variation of the position detection error due to eccentricity in each of the first embodiment and a conventional example. Fig. 15 shows how magnetomotive force of the 0th order spatial harmonic is generated in the first embodiment. Figs. 16A and 16B are graphs showing influence of magnetomotive force of the 0th order spatial harmonic on an output voltage in the first embodiment and a conventional example. Fig. 17 is a graph showing how a characteristic of the rotation angle detecting device according to the first embodiment varies with respect to $N_1/N_2$.

A conventional example will be described below before describing the rotation angle detecting device (Number of multiple: 8) according to the first embodiment.

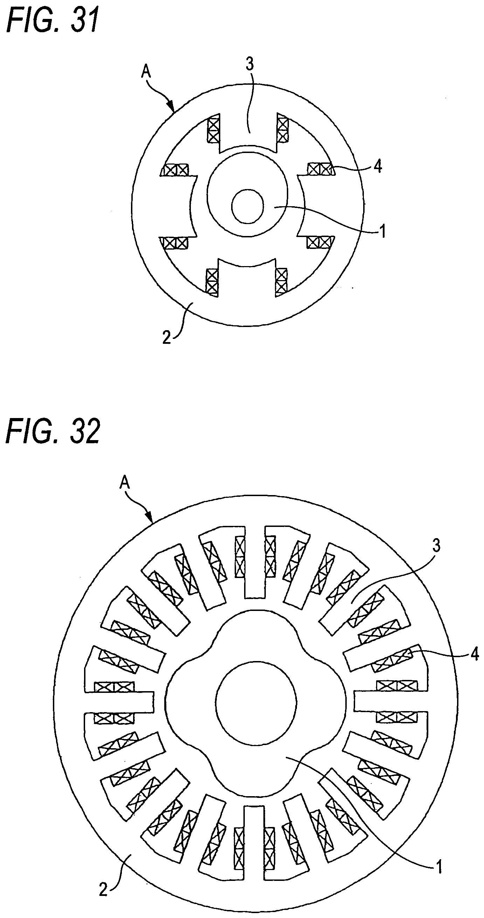

Fig. 31 shows a conventional example (Number of multiple: 1; number of teeth 3 of stator 2: 4) as disclosed in patent document-2. In this case, the number of teeth 3 increases with the Number of multiple. For example, the Number of multiple is increased to four, the number of teeth 3 becomes as large as 16 as shown in Fig. 32. This device is not suitable for mass-production because the efficiency of winding work is low. If the Number of multiple is further increased to eight, the number of teeth 3 amounts to 32. It goes without saying that this device is not suitable for mass-production.

In contrast, the invention makes it possible to construct a rotation angle detecting device in which the number of teeth is kept small even if the Number of multiple is increased as compared with the conventional case. The structure of the rotation angle detecting device according to the first embodiment will be described below.

Fig. 1 shows a rotation angle detecting device in which the Number of multiple is eight and the number of teeth of a stator 2 is 12. The stator 2, which is opposed to a rotor 1, is composed of an iron core having 12 teeth 3 and windings 4, that is, a one-phase energization winding and two-phase output windings. To allow this rotation angle detecting device to function as a device whose Number of multiple is equal to eight, the rotor 1 is an iron core having eight projected poles and is rotatable.

Next, a description will be made of how to form windings 4, that is, the one-phase energization winding and the two-phase output windings.

The energization winding is wound in a concentrated manner on the teeth 3 of tooth numbers 1-12 so as to form six poles. The number of poles of the energization winding is different from that of the stator 2.

Consideration will be given to how to wind the output windings. To enable functioning as a rotation angle detecting device, it is necessary to detect, among magnetic flux components occurring in the gap, a magnetic flux component of a spatial order that is equal in number to one of |(number of pole pairs for energization) ± Number of multiple| where || is a symbol representing an absolute value.

Since the number of pole pairs for energization is three and the Number of multiple is eight, the above formula is calculated as

$$|3 \pm 8| = 5, 11.$$

That is, it is necessary to detect a magnetic flux component of the 5th or 11th order spatial harmonic (the 1st order spatial harmonic means a component whose period is equal to a mechanical angle 360°).

For example, patent document-4 shows an example in which the number of turns of output windings is varied sinusoidally. Fig. 2 shows a winding specification of a case that turns are distributed to the teeth sinusoidally (11th spatial order) as described in patent document-4. Fig. 3 is its graphical representation and shows that the turns are in sinusoidal form. It is noted that the numbers shown in Fig. 2 are ones obtained by rounding off ideal numbers of turns to the nearest whole numbers. The two-phase output windings are called "$\alpha$-phase winding" and "$\beta$-phase winding."

In contrast, in this embodiment, output windings are formed so as to be able to detect both of magnetic flux components of the 5th order spatial harmonic and 11th order spatial harmonic. In this case, an advantage is expected that the output voltages are higher than in the conventional case in which a component of only one spatial order is detected.

To this end, the numbers of turns of the respective teeth are determined by a function that is the sum of sinusoidal waves of the 5th order spatial harmonic and 11th order spatial harmonic.

The numbers of turns of the tooth number i of the $\alpha$-phase winding and the $\beta$-phase winding are represented by $N_{\alpha i}$ and $N_{\beta i}$, respectively, and the plus and minus signs represent opposite winding directions. Output windings capable of detecting magnetic flux components of both of the 5th order spatial harmonic and 11th order spatial harmonic can be formed by determining $N_{\alpha i}$ and $N_{\beta i}$ according to the following Equations (1) and (2):

$$N_{\alpha i} = N_1 \cos\{5 \times 2(i - 1)\pi/12 + \theta\}$$
$$+ N_2 \cos\{11 \times 2(i - 1)\pi/12 + \theta + \xi\} \quad \ldots\ldots (1)$$

$$N_{\beta i} = N_1 \sin\{5 \times 2(i - 1)\pi/12 + \theta\}$$
$$+ N_2 \sin\{11 \times 2(i - 1)\pi/12 + \theta + \xi\} \quad \ldots\ldots (2)$$

In this embodiment, the tooth number i is an integer selected from 1 to 12. Parameters $N_1$ and $N_2$ are arbitrary constants and may have either the same or different values. Parameters $\theta$ and $\xi$ are also arbitrary constants and represent the initial phase of a winding for detecting a magnetic flux component of the 5th order spatial harmonic and the phase difference between that winding and a winding for detecting a magnetic flux component of the 11th order spatial harmonic, respectively. It is considered that a rotation angle detecting device capable of producing high output voltages can be constructed by selecting the above parameters properly.

Fig. 4 is a table showing the numbers of turns in a case that $N_1 = N_2 = 58$, $\theta = \pi/12$ (rad), and $\xi = 3\pi/2$ (rad). The numbers shown in Fig. 4 are ones obtained by rounding off ideal numbers of turns to the nearest whole numbers. Fig. 5 is its graphical representation. Fig. 6 shows results of an experiment in which variations of output voltages with respect to the position of the rotor 1 were measured for the winding specification according to this embodiment and the conventional winding specification. Since the Number of multiple of each rotation angle detecting device is eight, a mechanical angle 45° corresponds to an electrical angle 360° ((electrical angle) = Number of multiple x (mechanical angle)). That is, the output voltages vary sinusoidally with a period of a mechanical angle 45°. In Fig. 6, negative voltage values mean inverted phases. The phases of the output voltages of the α-phase winding and the β-phase winding are shifted from each other by an electrical angle 90°. It is concluded on the basis of the above facts that operation as a rotation angle detecting device is attained in both of this embodiment and the conventional example. Although Fig. 4 shows the example in which the numbers of turns are obtained by rounding off ideal numbers of turns to the nearest whole numbers, it goes without saying that operation as a rotation angle detecting device can be attained even with numbers including decimals. Turns of a number including a decimal may be formed in such a manner that, for example, winding of a tooth concerned is finished halfway without completing a final turn and winding of the adjacent tooth is started thereafter. It goes without saying that even if the number of turns are deviated from values according to Equations (1) and (2) by about 10%, for example, operation as a rotation angle detecting device can be attained though the position detection error increases because the output voltages vary sinusoidally.

The rotation angle detecting device according to this embodiment is different from the conventional rotation angle detecting device only in the specification of the output windings; that is, they are the same in the shapes of the stator 2 iron core and the rotor 1 iron core and in the axial length. Therefore, it can be said that the differences between the output voltages of the embodiment and those of the conventional example indicate superiority/inferiority of the specification of the output windings.

It is seen from Fig. 6 that the output voltages of the winding specification of the embodiment is two times or more higher than those of the conventional example. The sum of the numbers of turns of each output winding is equal to 568 or 656 in the embodiment and is equal to 448 in the conventional example (see Fig. 2). Two times or more higher output voltages are obtained by about 1.3-1.5 times larger numbers of turns, which means that the winding specification of the embodiment is more efficient than that of the conventional example. This is considered due to the ability that magnetic flux components of the 5th order spatial harmonic and 11th order spatial harmonic occurring in the gap of the rotation angle detecting device can be detected more efficiently as expressed by Equations (1) and (2).

In the above description, the phase difference ξ is assumed to be 3π/2 (rad). Fig. 7 shows results of an experiment in which output voltage values and position detection errors were measured for various winding specifications (ξ was varied). It is seen that the output voltage and the position detection error vary to a large extent when the phase difference ξ between the 5th spatial order term and the 11th spatial order term is varied. The output voltage becomes maximum and the position detection error becomes minimum when ξ is approximately equal to 270° = 3π/2 (rad). And the output voltage becomes minimum and the position detection error becomes maximum when ξ is approximately equal to 90° = π/2 (rad).

Consideration will be given to the reason for the above results. Fig. 8 shows a gap magnetic flux density waveform that was obtained when a current flows through the energization winding. This waveform includes a large 6-pole component (i.e., 3rd order spatial harmonic component), because the energization isperformedbythesixpoles. However, 5th and 11th order spatial magnetic flux components to be detected are found in Fig. 9 which shows a frequency analysis result. Fig. 10 shows a phase difference between those components. A phase difference of -86.7° (≅ 270°) is obtained by subtracting the phase of the 5th order spatial harmonic component from that of the 11th order spatial harmonic component and is approximately equal to the phase difference ξ = 270° =3π/2 (rad) where the output voltages have the maximum value in Fig. 7. This indicates that the output voltages can be made high by making the phase difference ξ between the 5th order and 11th order windings in Equations (1) and (2) equal to the phase difference between 5th order spatial harmonic component and 11th order spatial harmonic component that are actually included in a gap magnetic flux density waveform.

That is, the output voltages can be made high and the position detection error can be made small by properly setting the phase difference between the 5th order and 11th order windings.

Figs. 11 and 12 compare characteristics of a conventional winding specification for detecting only a 5th order spatial harmonic component and a conventional winding specification for detecting only a 11th order spatial harmonic component with those of the embodiment. It is seen that this embodiment provides advantages that the output voltages can be made higher than in the conventional examples and the position detection error can be made smaller than in the conventional examples. As such, this embodiment can provide a highly accurate rotation angle detecting apparatus.

Fig. 13 shows winding specifications in which the sum of the numbers of turns of the α-phase winding is equal to that of the β-phase winding. It goes without saying that operation as a rotation angle detecting device can be attained also in these cases as confirmed by the experiment of Fig. 7. Where the sum of the numbers of turns of the α-phase winding is equal to that of the β-phase winding, the resistance values of those two-phase output windings can also be equalized. Therefore, variations of the resistance values of the two-phase output windings due to a temperature variation or the like are the same, resulting in an advantage that related problems are less prone to occur on the detection circuit side.

In general, the output voltages can be made higher and the position detection error can be made smaller than in the conventional case and a highly accurate rotation angle detecting device can thereby be obtained by setting the numbers $N_{\alpha i}$ and $N_{\beta i}$ of turns of the ith teeth of the α-phase winding and the β-phase winding according to the following Equations (3) and (4) :

$$N_{\alpha i} = N_1 \cos\{(M - N) \times 2(i - 1)\pi/N_s + \theta\}$$

$$+ N_2 \cos\{(M + N) \times 2(i - 1)\pi/N_s + \theta + \xi\} \quad \ldots\ldots (3)$$

$$N_{\beta i} = N_1 \sin\{(M - N) \times 2(i - 1)\pi/N_s + \theta\}$$

$$+ N_2 \sin\{(M + N) \times 2(i - 1)\pi/N_s + \theta + \xi\} \quad \ldots\ldots (4)$$

where N is the number of pairs of energization poles, M is the number of projected poles of the rotor 1, $N_s$ is the number of teeth of the stator 2, and $N_1$, $N_2$, $\theta$, and $\xi$ are arbitrary constants. Setting $\theta$ and $\xi$ properly makes it possible to effectively utilize the magnetic flux in the gap and thereby maximize the output voltages.

Further, equalizing the sums of the numbers of turns of the two-phase output windings makes it possible to equalize their resistance variations and thereby provides an advantage that related problems are less prone to occur on the detection circuit side.

As in the case of the $\alpha$-phase winding shown in Fig. 4, plural teeth whose number of turns is zero can be provided by setting $\theta$ and $\xi$ properly. This provides an advantage that the efficiency of winding work can be made higher than in a conventional case in which the number of turns is varied sinusoidally and there are teeth that should be given only a small number of turns. This is because in such a conventional case it takes considerable time to move the nozzle of an automatic winding machine close to each of the teeth that should be given only a small number of turns and to position the nozzle there.

This embodiment provides another advantage that it can provide a rotation angle detecting device that is superior in mass-productivity because the number of teeth of the stator 2 can be kept small even if the Number of multiple is increased as compared with the conventional examples of Figs. 31 and 32.

The rotation angle detecting device of this embodiment has a further advantage that the position detection error does not increase much even when the rotor 1 goes eccentric. Fig. 14 shows a variation of the position detection error due to eccentricity. Comparison was made by designing rotation angle detecting devices in which the inner diameter of the stator 2 is equal to 20 mm.

In the conventional example, the position detection error is small in the ideal state that is free of eccentricity. However, eccentricity of only 0.10 mm causes an error of more than 3° (mechanical angle).

In contrast, in the embodiment, eccentricity of 0.10 mm causes no substantial increase in the position detection error. In practice, some error occurs in the attachment position when a rotation angle detecting device is attached. Therefore, a rotation angle detecting device is desired in which eccentricity causes no substantial increase in the position detection error. This embodiment satisfies that desire.

The reason why eccentricity causes no substantial increase in the position detection error in the rotation angle detecting device according to this embodiment is that the numbers of turns of the output windings are determined so that gap magnetic flux components of only particular orders (i.e., 5th order spatial harmonic and 11th order spatial harmonic) are detected. Eccentricity causes generation of magnetic flux components of such orders as not to be generated in the ideal state that is free of eccentricity, and the position detection error increases if the output windings detect those magnetic flux components. In this embodiment, no substantial increase occurs in the position detection error because the rotation angle detecting device is constructed so as to detect magnetic flux components of only particular orders.

Detecting magnetic flux components of only particular orders provides the following advantage. Fig. 15 shows how magnetomotive force of the 0th order spatial harmonic is generated in the rotation angle detecting device. As shown in Fig. 15, if there exists a current flowing around the shaft of the rotor 1 (i.e., in the direction indicated by an arrow), magnetomotive force is generated parallel with the shaft, whereby magnetomotive force of the 0th order spatial harmonic is generated in the gap of the rotation angle detecting device.

On the other hand, since the rotor 1 is configured so as to have a permeance variation of an order that is the same in number (in this case, the fourth order) as the Number of multiple, a magnetic flux component of the 4th order spatial harmonic is generated in the gap. If this magnetic flux component is varied over time as, for example, the rotor 1 rotates, it may influence the voltages of the output windings.

Figs. 16A and 16B illustrate differences between output voltage waveforms of this embodiment and a conventional example. It is seen that in the conventional example the waveform, which should have a sinusoidal envelope, is distorted to a large extent because of detection of a magnetic flux component that is generated by the magnetomotive force of the 0th order spatial harmonic. This waveform distortion causes a position detection error and even disables the rotation angle detection if its influence is greater.

In contrast, in the embodiment, since the output windings are formed so as to detect only magnetic flux components of particular orders, the influence of the magnetomotive force of the 0th order spatial harmonic is small and a sinusoidal envelope is obtained. A resulting position detection error is small. This advantage greatly contributes to reduction of the position detection error when the rotation angle detecting device is mounted on a generator or a motor.

Consideration will be given to the parameters $N_1$ and $N_2$ in Equations (3) and (4). The parameters $N_1$ and $N_2$ are arbitrary constants representing the amplitudes of the sinusoidal wave of the $|N - M|$th order spatial harmonic and the sinusoidal wave of the $|N + M|$th order spatial harmonic, respectively. How the output voltages and the position detection error of the rotation angle detecting device vary will be observed when $N_1/N_2$ is varied while $N_1 + N_2$ is kept constant. Now, a parameter

(output voltage (V))/(position detection error (°)) is defined as a parameter representing the performance of the rotation angle detecting device. A high output voltage is preferable for the rotation angle detecting device because it is less influenced by noise when the output voltage is higher. Needless to say, the rotation angle detecting device is more accurate when the position detection error is smaller. Therefore, it can be said that it is preferable for the rotation angle detecting device that the above parameter be as large as possible.

Fig. 17 shows a variation of the parameter (output voltage (V))/(position detection error (°)) with respect to $N_1/N_2$. The horizontal axis represents $N_1/N_2$ and the vertical axis represents the parameter (output voltage (V))/(position detection error (°)). A broken-line curve corresponds to a case of no eccentricity and a solid-line curve corresponds to a case of 0.1 mm eccentricity. It is seen from Fig. 17 that the characteristic of the rotation angle detecting device strongly depends on $N_1/N_2$.

In the rotation angle detecting device, it is preferable that the relationship

$$\text{(output voltage (V))/(position detection error (°))}$$

$$\geq 1.0$$

be generally satisfied. For example, as long as this relationship is satisfied, the position detection error is 1° or less and hence the rotation angle detecting device is highly accurate if the device is designed so that the output voltage is equal to about 1 V. And the position detection error is as small as 0.1° or less if the output voltage is equal to 0.1 V.

If $N_1/N_2$ is set so as to satisfy the inequality

$$0.6 \leq N_1/N_2 \leq 4.0,$$

the above-mentioned relationship

$$\text{(output voltage (V))/(position detection error (°))}$$

$$\geq 1.0$$

is satisfied even if eccentricity occurs between the rotor 1 and the stator 2 due to an attachment position error, whereby a highly accurate rotation angle detecting device can be obtained in which the output voltage is high and the position detection error is small.

In the characteristic with eccentricity shown in Fig. 17, the above-mentioned parameter has the maximum value when $N_1/N_2$ is equal to 1. That is, if $N_1/N_2$ is set to 1, the deterioration of the characteristic due to eccentricity is small and hence a rotation angle detecting device exhibiting highest performance can be obtained.

The first embodiment of the invention includes the configurations of the following items [1] to [8] and these configuration provide advantages described in the respective items [1] to [8].

[1] A rotation angle detecting device comprising:

a stator 2 that is an iron core having teeth 3 and is provided with a one-phase energization winding and two-phase output windings; and a rotor 1 having projected poles, wherein when the number of pole pairs of the energization winding is represented by N and the number of projected poles of the rotor 1 is represented by M, 2N is different from the number of teeth 3 of the stator 2 and the numbers of turns of the two-phase output windings are given by functions each of which is a sum of or a difference between sinusoidal waves of a $|N + M|$th order spatial harmonic and a $|N - M|$th order spatial harmonic (i. e. , a composite function of these sinusoidal waves).

(Advantages)

The output voltages can be made higher and the position detection error can be made smaller than in the conventional case and a highly accurate rotation angle detecting device can thereby be obtained.

This configuration can provide a rotation angle detecting device that is superior in mass-productivity because the number of teeth 3 of the stator 2 can be kept small even if the Number of multiple is increased as compared with the conventional example of Figs. 1 and 2. Further, eccentricity or magnetomotive force of the 0th order spatial harmonic does not much increase the position detection error.

[2] In the rotation angle detecting device of item [1], the numbers $N_{\alpha i}$ and $N_{\beta i}$ of turns of ith teeth of an $\alpha$-phase winding and a $\beta$-phase winding as the two-phase output windings are given by:

$$N_{\alpha i} = N_1 \cos\{(M - N) \times 2(i - 1)\pi/N_s + \theta\}$$

$$+ N_2 \cos\{(M + N) \times 2(i - 1)\pi/N_s + \theta + \xi\}$$

$$N_{\beta i} = N_1 \sin\{(M - N) \times 2(i - 1)\pi/N_s + \theta\}$$

$$+ N_2 \sin\{(M + N) \times 2(i - 1)\pi/N_s + \theta + \xi\}$$

where $N_s$ is the number of teeth 3 of the stator 2 and $N_1$, $N_2$, $\theta$, and $\xi$ are arbitrary constants.

(Advantage)

The output voltages can be made higher and the position detection error can be made smaller than in the conventional case and a highly accurate rotation angle detecting device can thereby be obtained. Setting $\theta$ and $\xi$ properly makes it possible to effectively utilize the magnetic flux in the gap and thereby maximize the output voltages. Further, equalizing the sums of the numbers of turns of the two-phase output windings makes it possible to equalize their resistance variations and thereby provides an advantage that related problems are less prone to occur on the detection circuit side.

As in the case of the $\alpha$-phase winding shown in Fig. 4, plural teeth 3 whose number of turns is zero can be provided by setting $\theta$ and $\xi$ properly. This provides an advantage that the efficiency of winding work can be made higher than in a conventional case in which the number of turns is varied sinusoidally and there are teeth that should be given only a small number of turns. This is because in such a conventional case it takes considerable time to move the nozzle of an automatic winding machine close to each of the teeth that should be given only a small number of turns and to position the nozzle there.

This configuration provides another advantage that it can provide a rotation angle detecting device that is superior in mass-productivity because the number of teeth 3 of the stator 2 can be kept small even if the Number of multiple is increased as compared with the conventional examples of Figs. 31 and 32. Eccentricity or magnetomotive force of the 0th order spatial harmonic does not much increase the position detection error. Further, a highly accurate rotation angle detecting device in which the output voltages are high and the position detection error is small can be obtained by setting the ratio between $N_1$ to $N_2$ properly.

[3] In the rotation angle detecting device of item [2], $\xi$ is set equal to a phase difference between magnetic flux components of the |N + M|th order spatial harmonic and the |N - M|th order spatial harmonic occurring in a gap.

(Advantage)

The output voltages can be made higher than in the conventional case and a highly accurate rotation angle detecting device can thereby be obtained.

[4] In the rotation angle detecting device of item [1], a sum of the numbers of turns of one of the two-phase output windings is set approximately equal to that of the other of the two-phase output windings.

(Advantage)

This equalizes the resistance values of the two-phase output windings and hence their variations due to a temperature variation can be equalized between the two-phase output windings.

[5] In the rotation angle detecting device of item [1], part of the teeth 3 are provided with no turns of at least one of the two-phase output windings.

(Advantage)

This provides an advantage that the efficiency of winding work can be made higher than in a conventional case in which the number of turns is varied sinusoidally and there are teeth that should be given only a small number of turns. This is because in such a conventional case it takes considerable time to move the nozzle of an automatic winding machine close to each of the teeth that should be given only a small number of turns and to position the nozzle there.

[6] In the rotation angle detecting device of item [2], $N_1$ and $N_2$ are set so as to satisfy $0.6 \leq N_1/N_2 \leq 4.0$, more preferably, $N_1/N_2 = 1$.

(Advantage)

This provides an advantage that a highly accurate rotation angle detecting device can be obtained in which the output voltages are high and the position detection error is small.

[7] In the rotation angle detecting device of item [1], the number of teeth 3 is equal to nine.

(Advantage)

Since the number of teeth 3 is small even if the Number of multiple is large, a rotation angle detecting device that is superior in mass-productivity can be provided.

[8] In the rotation angle detecting device of item [1], the number of teeth 3 is equal to 12.

(Advantages)

Since the number of teeth 3 is small even if the Number of multiple is either 4 or 8, a rotation angle detecting device that is superior in mass-productivity can be provided. Further, since rotation angle detecting devices having small Number of multiple can be constructed, rotation angle detecting devices having various Number of multiple can be obtained by using the same stator 2. Therefore, common parts are increased, which contributes to increase of the mass-productivity. Commonizing the stator iron core makes it unnecessary to prepare new metal dies when only the Number of multiple is changed. This leads to great reduction in the manufacturing cost. Embodiment 2 (number of teeth: 12; Number of multiple: 4)

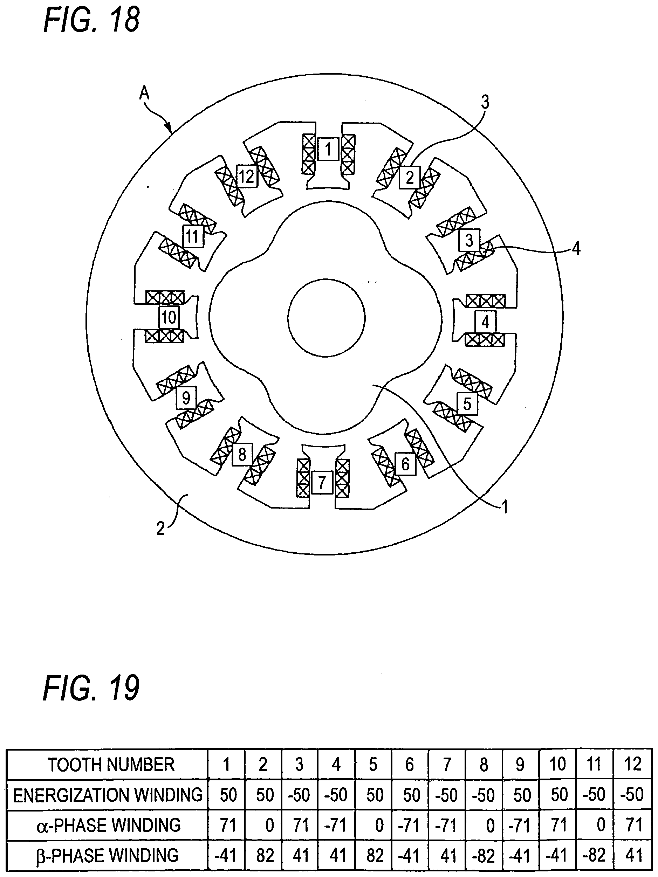

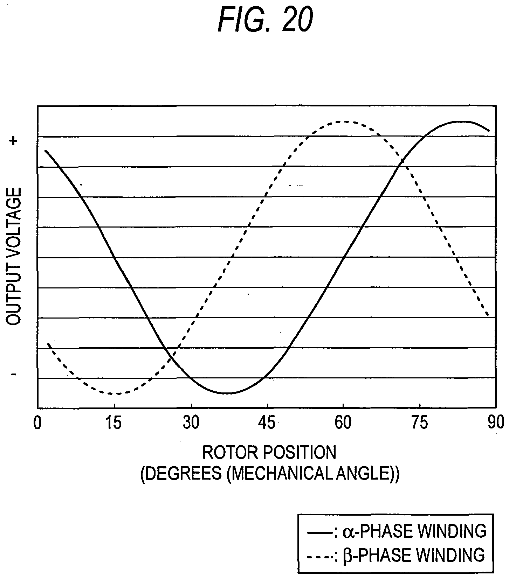

A second embodiment of the invention will be described below with reference to Figs. 18-20. Fig. 18 is a horizontal sectional view showing the structure of a rotation angle detecting device (number of teeth: 12; Number of multiple: 4) according to the second embodiment. Fig. 19 is a table showing an exemplary winding specification (number of teeth: 12; Number of multiple: 4) according to the second embodiment. Fig. 20 is a graph showing output voltage waveforms of the second embodiment.

Except for features specific to the second embodiment which will be described below, the second embodiment is the same in configuration and functions in the same manner as the first embodiment. In Figs. 18-20, components of the second embodiment having the same or corresponding components in the first embodiment are given the same reference numerals as the latter.

The second embodiment is different from the first embodiment in the Number of multiple. In the conventional example shown in Fig. 32, the Number of multiple is four and the number of teeth is as large as 16. As such, the structure of this conventional example is not suitable for mass-production.

In contrast, in this embodiment, as shown in Fig. 18, a rotation angle detecting device whose Number of multiple is equal to four can be constructed with 12 teeth.

As described above, to enable functioning as a rotation angle detecting device, it is necessary to detect, among magnetic flux components occurring in the gap, a magnetic flux component of a spatial order that is equal in number to one of l (number of pole pairs for energization) ± Number of multiple| where | | is a symbol representing an absolute value.

Since the number of pole pairs for energization is three and the Number of multiple is four, the above formula is calculated as

$$|3 \pm 4| = 1, 7.$$

That is, it is necessary to detect a magnetic flux component of the 1st order spatial harmonic or 7th order spatial harmonic. By substituting M = 4 and N = 3 into Equations (3) and (4), the following Equations (5) and (6) are obtained:

$$N_{\alpha i} = N_1 \cos\{1 \times 2(i - 1)\pi/N_s + \theta\}$$

$$+ N_2 \cos\{7 \times 2(i - 1)\pi/N_s + \theta + \xi\} \quad \ldots\ldots \quad (5)$$

$$N_{\beta i} = N_1 \sin\{1 \times 2(i - 1)\pi/N_s + \theta\}$$

$$+ N_2 \sin\{7 \times 2(i - 1)\pi/N_s + \theta + \xi\} \quad \ldots\ldots \quad (6)$$

Fig. 19 shows the numbers of turns corresponding to a case that $N_1 = N_2 = 58$, $\theta = \pi/12$ (rad), and $\xi = 3\pi/2$ (rad) in Equations (5) and (6). Since the number of teeth is 12, $N_s$ is set to 12. The numbers shown in Fig. 19 are ones obtained by rounding off ideal numbers of turns to the nearest whole numbers.

Fig. 20 shows variations of the output voltages that are obtained when the numbers of turns are determined in the above-described manner. The voltages of the two-phase output windings vary sinusoidally with a period of 90° (mechanical angle). Therefore, it is concluded that operation of a rotation angle detecting device whose Number of multiple is four is attained.

Where the output windings are formed by determining the numbers of turns according to this embodiment, the number of teeth is made smaller and the efficiency of winding work is made higher than in a conventional case with the same Number of multiple. As a result, a rotation angle detecting device that is superior in mass-productivity can be obtained.

Further, since the numbers of turns of plural teeth are zero as shown in Fig. 19, no time is needed to move a winding nozzle close to teeth that are to be given only a small number of turns. This contributes to increase in the efficiency of winding work.

Embodiment 3 (number of teeth: 12; Number of multiple: 5)

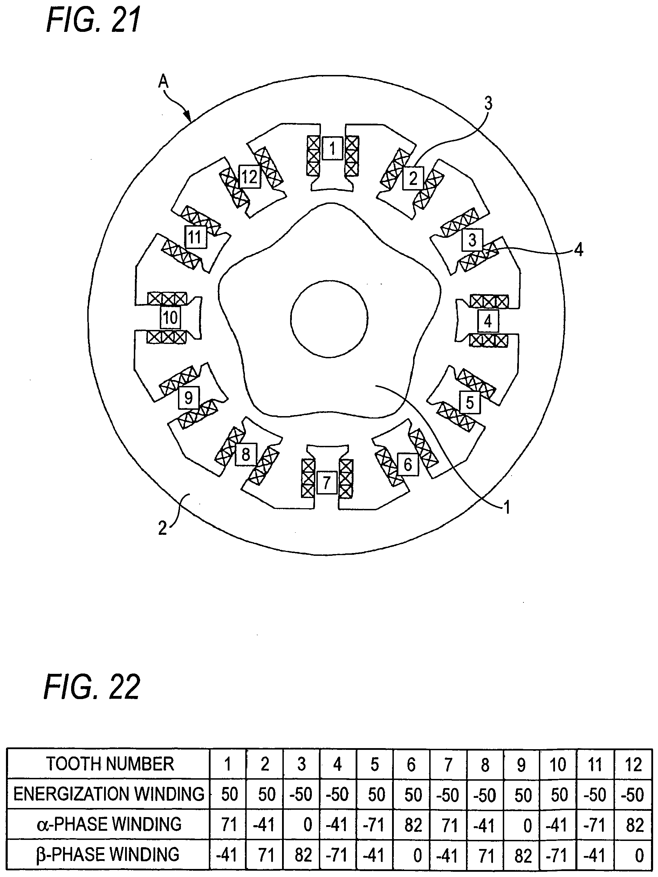

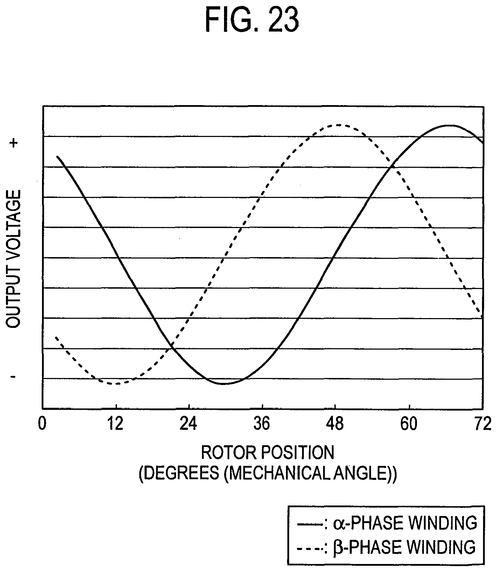

A third embodiment of the invention will be described below with reference to Figs. 21-23. Fig. 21 is a horizontal sectional view showing the structure of a rotation angle detecting device (number of teeth: 12; Number of multiple: 5) according to the third embodiment. Fig. 22 is a table showing an exemplary winding specification (number of teeth: 12; Number of multiple: 4) according to the third embodiment. Fig. 23 is a graph showing output voltage waveforms of the third embodiment.

Except for features specific to the third embodiment which will be described below, the third embodiment is the same in configuration and functions in the same manner as the first embodiment. In Figs. 21-23, components of the third embodiment having the same or corresponding components in the first embodiment are given the same reference numerals as the latter.

The first and second embodiments are directed to the case that the Number of multiple is an even number. In contrast, the third embodiment is directed to a case that the Number of multiple is an odd number, specifically, five (see Fig. 21).

As in the case of the first and second embodiments, it is necessary to detect a magnetic flux component of a spatial order that is equal in number to one of |(number of pole pairs for energization) $\pm$ Number of multiple| where | | is a symbol representing an absolute value.

Since the number of pole pairs for energization is three and the shaft multiple angle is five, the above formula is calculated as

$$|3 \pm 5| = 2, 8.$$

That is, it is necessary to detect a magnetic flux component of the 2nd order spatial harmonic or 8th order spatial harmonic. By substituting M = 5 and N = 3 into Equations (3) and (4), the following Equations (7) and (8) are obtained:

$$N_{\alpha i} = N_1 \cos\{2 \times 2(i - 1)\pi/N_s + \theta\}$$
$$+ N_2 \cos\{8 \times 2(i - 1)\pi/N_s + \theta + \xi\} \quad \ldots\ldots \quad (7)$$

$$N_{\beta i} = N_1 \sin\{2 \times 2(i - 1)\pi/N_s + \theta\}$$
$$+ N_2 \sin\{8 \times 2(i - 1)\pi/N_s + \theta + \xi\} \quad \ldots\ldots \quad (8)$$

Fig. 22 shows the numbers of turns corresponding to a case that $N_1 = N_2 = 58$, $\theta = \pi/12$ (rad), and $\xi = 3\pi/2$ (rad) in Equations (7) and (8). Since the number of teeth is 12, $N_s$ is set to 12. The numbers shown in Fig. 22 are ones obtained by rounding off ideal numbers of turns to the nearest whole numbers.

Fig. 23 shows variations of the output voltages that are obtained when the numbers of turns are determined in the above-described manner. The voltages of the two-phase output windings vary sinusoidally with a period of 72° (mechanical angle) . Therefore, it is concluded that operation of a rotation angle detecting device whose Number of multiple is five is attained. Further, in the conventional case, the number of teeth amounts to as large as 20 when the Number of multiple is equal to five. In contrast, in this embodiment, the number of teeth is as small as 12.

Where the output windings are formed by determining the numbers of turns according to this embodiment, the number of teeth is made smaller and the efficiency of winding work is made higher than in a conventional case with the same Number of multiple. As a result, a rotation angle detecting device that is superior in mass-productivity can be obtained.

Further, since the numbers of turns of plural teeth are zero as shown in Fig. 22, no time is needed to move a winding nozzle close to teeth that are to be given only a small number of turns. This contributes to increase in the efficiency of winding work.

Embodiment 4 (number of teeth: 12; Number of multiple: 1)

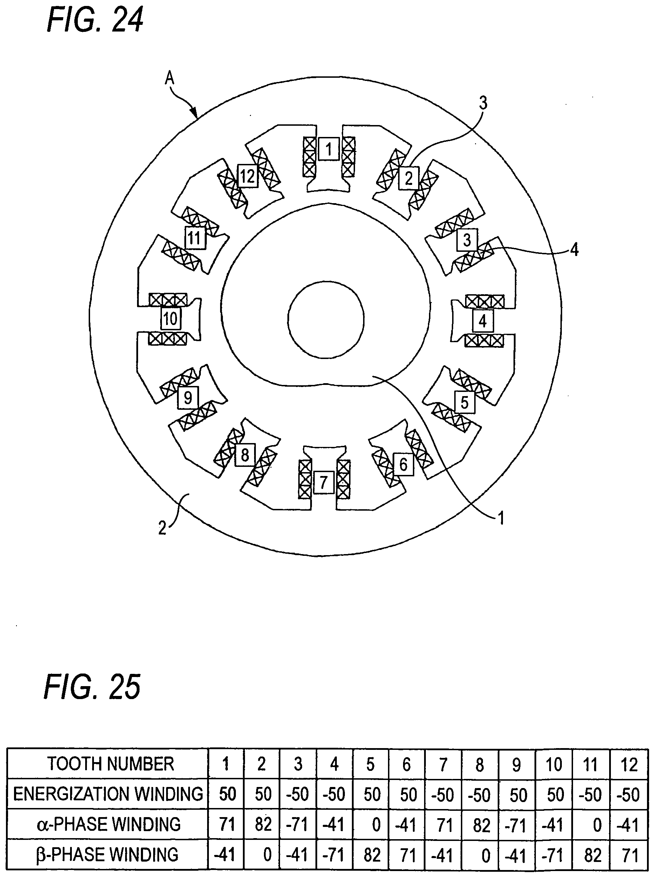

A fourth embodiment of the invention will be described below with reference to Figs. 24-26. Fig. 24 is a horizontal sectional view showing the structure of a rotation angle detecting device (number of teeth: 12; Number of multiple: 1) according to the fourth embodiment. Fig. 25 is a table showing an exemplary winding specification (number of teeth: 12; Number of multiple: 1) according to the fourth embodiment.

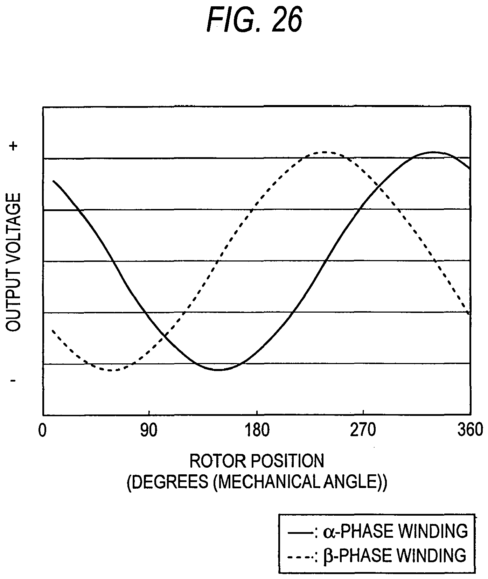

Fig. 26 is a graph showing output voltage waveforms of the fourth embodiment.

Except for features specific to the fourth embodiment which will be described below, the fourth embodiment is the same in configuration and functions in the same manner as the first embodiment. In Figs. 24-26, components of the fourth embodiment having the same or corresponding components in the first embodiment are given the same reference numerals as the latter.

The first to third embodiments are directed to the case that the number of teeth is kept small even if the Number of multiple is increased as compared with the conventional case. However, in view of mass-productivity, using the same stator iron core for various Number of multiple is convenient because it increases common parts. This embodiment is directed to a case that the Number of multiple is equal to one.

Fig. 24 shows a structure in which the Number of multiple is one and the number of teeth is 12 that is the same as in the first to third embodiments. As in the case of the first to third embodiments, it is necessary to detect a magnetic flux component of a spatial order that is equal in number to one of |(number of pole pairs for energization) $\pm$ Number of multiple| where I I is a symbol representing an absolute value.

Since the number of pole pairs for energization is three and the Number of multiple is one, the above formula is calculated as

$$|3 \pm 1| = 2, 4.$$

That is, it is necessary to detect a magnetic flux component of the 2nd spatial harmonic or 4th order spatial harmonic. By substituting M = 1 and N = 3 into Equations (3) and (4), the following Equations (9) and (10) are obtained:

$$N_{\alpha i} = N_1 \cos\{(-2) \times 2(i - 1)\pi/N_s + \theta\}$$

$$+ N_2 \cos\{4 \times 2(i - 1)\pi/N_s + \theta + \xi\} \quad \ldots\ldots (9)$$

$$N_{\beta i} = N_1 \sin\{(-2) \times 2(i - 1)\pi/N_s + \theta\}$$

$$+ N_2 \sin\{4 \times 2(i - 1)\pi/N_s + \theta + \xi\} \quad \ldots\ldots (10)$$

Fig. 25 shows the numbers of turns corresponding to a case that $N_1 = N_2 = 58$, $\theta = \pi/12$ (rad), and $\xi = 3\pi/2$ (rad) in Equations (9) and (10). Since the number of teeth is 12, $N_s$ is set to 12. The numbers shown in Fig. 25 are ones obtained by rounding off ideal numbers of turns to the nearest whole numbers.

Fig. 26 shows variations of the output voltages that are obtained when the numbers of turns are determined in the above-described manner. The voltages of the two-phase output windings vary sinusoidally with a period of 360° (mechanical angle). Therefore, it is concluded that operation of a rotation angle detecting device whose Number of multiple is one is attained.

As described above, according to this embodiment, rotation angle detecting devices having various Number of multiple can be constructed by using the same stator 2. This provides an advantage that common parts are increased and hence the mass-productivity can be increased.

Commonizing the stator iron core makes it unnecessary to prepare new metal dies when only the Number of multiple is changed. This provides an advantage that the manufacturing cost is reduced greatly.

Embodiment 5 (number of teeth: 9; Number of multiple: 8)

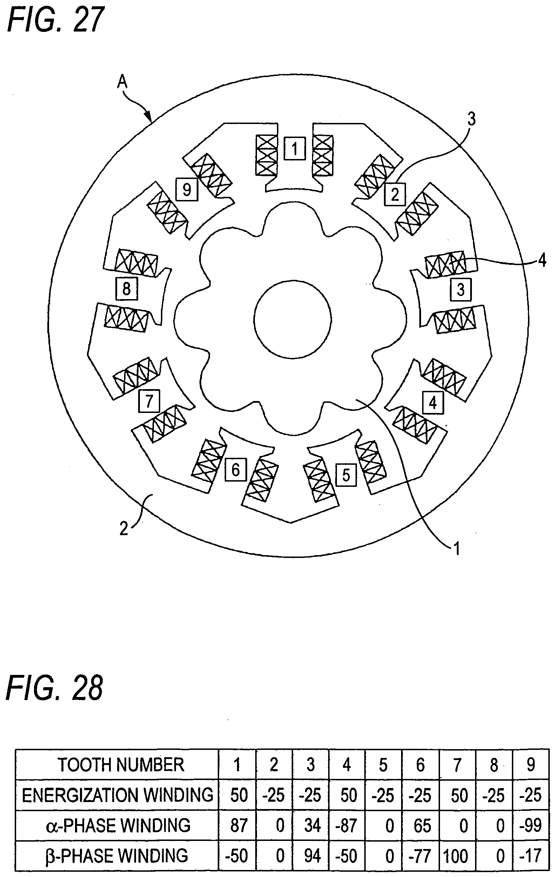

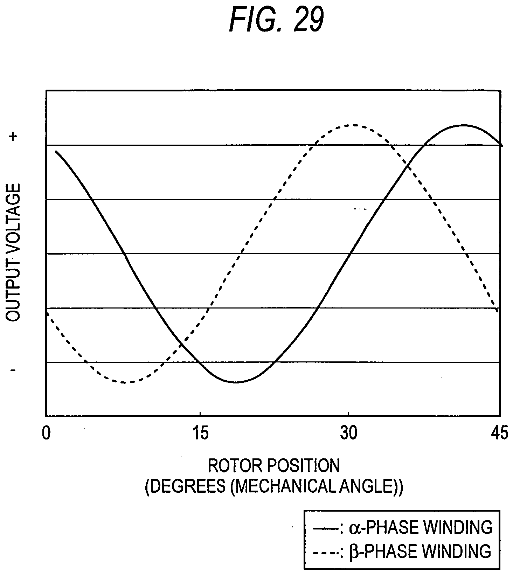

A fifth embodiment of the invention will be described below with reference to Figs. 27-29. Fig. 27 is a horizontal sectional view showing the structure of a rotation angle detecting device (number of teeth: 9; Number of multiple: 8) according to the fifth embodiment. Fig. 28 is a table showing an exemplary winding specification (number of teeth: 9; Number of multiple: 8) according to the fifth embodiment. Fig. 29 is a graph showing output voltage waveforms of the fifth embodiment.

Except for features specific to the fifth embodiment which will be described below, the fifth embodiment is the same in configuration and functions in the same manner as the first embodiment. In Figs. 27-29, components of the fifth embodiment having the same or corresponding components in the first embodiment are given the same reference numerals as the latter.

All of the first to fourth embodiments are directed to the case that the number of teeth is equal to 12. In contrast, the fifth embodiment is directed to a case that the number of teeth is even smaller, specifically, nine (Number of multiple is eight; see Fig. 27).

As in the case of the first to fourth embodiments, it is necessary to detect a magnetic flux component of a spatial order that is equal in number to one of |(number of pairs of poles for energization) ± Number of multiple | where | | is a symbol representing an absolute value.

Since the number of pole pairs for energization is three and the Number of multiple is eight, the above formula is calculated as

$$|3 \pm 8| = 5, 11.$$

That is, it is necessary to detect a magnetic flux component of the 5th order spatial harmonic or 11th order spatial harmonic. By substituting M = 8 and N = 3 into Equations (3) and (4), the following Equations (11) and (12) are obtained:

$$N_{\alpha i} = N_1 \cos\{5 \times 2(i - 1)\pi/N_s + \theta\}$$

$$+ N_2 \cos\{11 \times 2(i - 1)\pi/N_s + \theta + \xi\} \quad \ldots\ldots (11)$$

$$N_{\beta i} = N_1 \sin\{5 \times 2(i - 1)\pi/N_s + \theta\}$$

$$+ N_2 \sin\{11 \times 2(i - 1)\pi/N_s + \theta + \xi\} \quad ..... \quad (12)$$

Fig. 28 shows the numbers of turns corresponding to a case that $N_1 = N_2 = 58$, $\theta = \pi/12$ (rad), and $\xi = 5\pi/3$ (rad) in Equations (11) and (12). Since the number of teeth is 9, $N_s$ is set to 9. The numbers shown in Fig. 28 are ones obtained by rounding off ideal numbers of turns to the nearest whole numbers.

Fig. 29 shows variations of the output voltages that are obtained when the numbers of turns are determined in the above-described manner. The voltages of the two-phase output windings vary sinusoidally with a period of 45° (mechanical angle) . Therefore, it is concluded that operation of a rotation angle detecting device whose Number of multiple is eight is attained. Further, in the conventional case, the number of teeth amounts to as large as 32 when the Number of multiple is equal to eight. In contrast, in this embodiment, the number of teeth is as small as nine.

Where the output windings are formed by determining the numbers of turns according to this embodiment, the number of teeth is made smaller and the efficiency of winding work is made higher than in a conventional case with the same Number of multiple. As a result, a rotation angle detecting device that is superior in mass-productivity can be obtained.

Further, since the numbers of turns of plural teeth are zero as shown in Fig. 28, no time is needed to move a winding nozzle close to teeth that are to be given only a small number of turns unlike in the conventional case. This contributes to increase in the efficiency of winding work.

Although the first to fifth embodiments are directed to the case that the number of teeth is equal to nine or 12, rotation angle detecting devices in which the number of teeth is equal to other numbers can be constructed according to the invention.

Embodiment 6 (Belt-drive-type ISG)

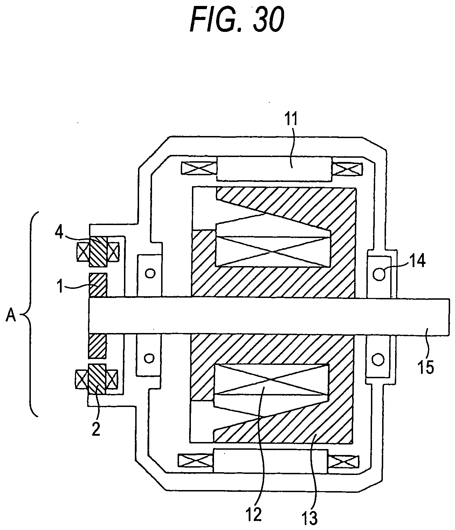

A sixth embodiment of the invention will be described with reference to Fig. 30. Fig. 30 is a vertical sectional view showing an example in which a rotation angle detecting device according to the invention is applied to a generator having a claw-shaped field iron core. A rotation angle detecting device A shown in Fig. 30 has a configuration according to one of the first to fifth embodiments.

It was stated in the first to fifth embodiments that forming the output windings by paying attention to magnetic flux components of particular orders makes it possible to keep the number of teeth of the stator 2 small even if the Number of multiple is increased as compared with the conventional case and to thereby provide a rotation angle detecting device that is superior in mass-productivity. It was also stated that rotation angle detecting devices having various Number of multiple can be constructed by using the same stator iron core.

Since such rotation angle detecting devices are less expensive and more environment-resistant than optical encoders, systems that are inexpensive and superior in environment resistance can be constructed by using such rotation angle detecting devices as rotation angle sensors of motors, generators, etc. One example is to incorporate a rotation angle detecting device according to the invention into a vehicular belt-drive-type ISG (integrated starter generator).

Fig. 30 shows a configuration in which a rotation angle detecting device according to the invention is incorporated in a generator having a claw-shaped field iron core.

The rotation angle detecting device A is attached to the end of a shaft 15 to which a claw-shaped field iron core 13 of the generator that is provided with a field winding 12 and serves as a rotor that is opposed to a stator 11 of the generator. Reference numeral 14 denotes a bearing. A rotor 1 of the rotation angle detecting device A is fixed to the shaft 15 of the generator and is opposed to a stator 2 of the rotation angle detecting device A that is provided with an energization winding and output windings 4.

In belt-drive-type ISG systems, the generator (also serves as a motor) is disposed in an engine room where the temperature becomes very high. Therefore, optical encoders are not suitable for this purpose. Further, the use of an optical encoder increases the system cost. These are the reasons for employing rotation angle detecting devices using an iron core and windings. The use of a rotation angle detecting device according to the invention makes it possible to construct a system that is inexpensive and superior in environment resistance.

In motors or generators having a claw-shaped field iron core, a field current flows as shown in Fig. 15 to cause magnetomotive force of the 0th order spatial harmonic in the gap of the rotation angle detecting device. As a result, a magnetic flux component of a spatial order that is equal in number to the Number of multiple is generated in the gap. Conventionally, the output windings detect this component, which results in increase in the position detection error.

In contrast, as described in the first embodiment, in the invention the output windings are formed so as to detect magnetic flux components of only particular orders and hence increase in the position detection error can be prevented.

This embodiment is directed to the motor or generator having the claw-shaped field iron core. However, magnetomotive force of the 0th order spatial harmonic may occur in general motors and generators. It goes without saying that also in general motors and generators increase in the position detection error can be prevented by using a rotation angle detecting device according to the invention.

The first to sixth embodiments are characterized in that the numbers of turns of the two-phase output windings are given by the functions each of which is the sum of or the difference between sinusoidal waves of the |N + M|th order spatial harmonic and the |N - M|th order spatial harmonic where N is the number of pole pairs of the energization winding and M is the number of projected poles of the rotor 1.

The method for determining the numbers of turns was described above by using more specific formulae. However, the numbers of turns may be determined by any other proper formulae or methods and the same advantages can also be obtained in such cases.

Even if the numbers of turns are different from ones according to the invention by about 10%, operation as a rotation angle detecting device can be attained and the same advantages can also be obtained in such a case.

As described above, the invention can provide a rotation angle detecting device which is highly accurate and superior in mass-productivity and in which the output voltages can be made relatively high, the position detection error can be made small, and the number of teeth of the stator can be kept small even if the Number of multiple is increased.

**Claims**

1. A rotation angle detecting device utilizing a variation in the permeance of the gap between a rotor (1) and a stator (2), comprising:

   a stator (2) that is an iron core having teeth (3) and is provided with a one-phase energization winding and two-phase output windings; and
   a rotor (1) having projected poles,
   **characterised in that**, when the number of pole pairs of the energization winding is represented by N and the number of projected poles of the rotor (1) is represented by M, 2N is different from the number of teeth of the stator (2) and the numbers of turns of the two-phase output windings at the respective teeth are given by functions each of which is a sum of or a difference between sinusoidal waves of a |N + M|th order spatial harmonic and a |N - M|th order spatial harmonic.

2. The rotation angle detecting device according to claim 1, wherein the numbers $N_{\alpha i}$ and $N_{\beta i}$ of turns of i-th teeth (3) of an $\alpha$-phase winding and a $\beta$-phase winding as the two-phase output windings are given by:

$$N_{\alpha i} = N_1 \cos\{(M - N) \times 2(i - 1)\pi /N_S + \theta\} \\ + N_2 \cos\{(M + N) \times 2(i - 1)\pi /N_S + \theta + \xi\}$$

$$N_{\beta i} = N_1 \sin\{(M - N) \times 2(i - 1)\pi/N_S + \theta\} \\ + N_2 \sin\{(M + N) \times 2(i - 1)\pi/N_S + \theta + \xi\}$$

   where Ns is the number of teeth of the stator (2) and $N_1$, $N_2$, $\theta$, and $\xi$ are arbitrary constants.

3. The rotation angle detecting device according to claim 2, wherein $\xi$ is set equal to a phase difference between magnetic flux components of the |N + M|th order spatial harmonic and the |N - M|th order spatial harmonic occurring in a gap.

4. The rotation angle detecting device according to any of claims 1 to 3, wherein a sum of the numbers of turns of one of the two-phase output windings is set approximately equal to that of the other of the two-phase output windings.

5. The rotation angle detecting device according to any of claims 1 to 3, wherein part of the teeth (3) are provided with no turns of at least one of the two-phase output windings.

6. The rotation angle detecting device according to any of claims 2 to 5, wherein $N_1$ and $N_2$ are set so as to satisfy $0.6 \le N_1/N_2 \le 4.0$.

7. The rotation angle detecting device according to any of claims 2 to 6, wherein $N_1$ and $N_2$ are set so as to satisfy

$N_1/N_2 = 1$.

8. The rotation angle detecting device according to any of the preceding claims, wherein the number of teeth (3) is equal to nine.

9. The rotation angle detecting device according to any of claims 1 to 7, wherein the number of teeth (3) is equal to 12.

10. An electric rotary machine which comprises a rotation angle detecting device having the features of one of claims 1 to 9.


**Patentansprüche**

1. Drehwinkelerfassungsvorrichtung, die eine Änderung der Permeanz eines Spalts zwischen einem Rotor (1) und einem Stator (2) ausnutzt, umfassend:

   einen Stator (2), der ein Eisenkern mit Zähnen (3) ist und mit einer einphasigen Erregerwicklung und zweiphasigen Ausgangswicklungen versehen ist; und
   einen Rotor (1) mit vorstehenden Polen,
   **dadurch gekennzeichnet, dass**
   wenn die Anzahl von Polpaaren der Erregerwicklung durch N repräsentiert ist und die Anzahl der vorstehenden Pole des Rotors (1) durch M repräsentiert ist, 2N von der Anzahl der Zähne des Stators (2) verschieden ist und die Anzahl der Windungen der zweiphasigen Ausgangswicklungen an den jeweiligen Zähnen durch Funktionen gegeben ist, die jeweils eine Summe oder eine Differenz zwischen sinusförmigen Wellen einer räumlichen harmonischen Ordnung |N + M | th und einer räumlichen harmonischen Ordnung | N - M | th sind.

2. Drehwinkelerfassungsvorrichtung nach Anspruch 1, bei der
   die Anzahl $N\alpha i$ und $N\beta i$ von Windungen der i-ten Zähne (3) einer $\alpha$-Phasenwicklung und einer $\beta$-Phasenwicklung als die zweiphasigen Ausgangswicklungen gegeben sind durch:

$$N_{\alpha i} = N_1 \cos \{(M - N) \times 2 (i - 1) \pi / N_s + \theta\}$$
$$+ N_2 \cos \{(M + N) \times 2 (i - 1) \pi / N_s + \theta + \xi\}$$

$$N_{\beta i} = N_1 \sin \{(M - N) \times 2 (i - 1) \pi / N_s + \theta\}$$
$$+ N_2 \sin \{(M + N) \times 2 (i - 1) \pi / N_s + \theta + \xi\}$$

   wobei $N_s$ die Anzahl der Zähne des Stators (2) ist und $N_1$, $N_2$, $\theta$ und $\xi$ beliebige Konstanten sind.

3. Drehwinkelerfassungsvorrichtung nach Anspruch 2, bei der
   $\xi$ gleich einer Phasendifferenz gesetzt ist, die zwischen den magnetischen Flusskomponenten der räumlichen harmonischen Ordnung | N + M | th und der räumlichen harmonischen Ordnung | N - M | th in einem Spalt auftritt.

4. Drehwinkelerfassungseinrichtung nach einem der Ansprüche 1 bis 3, bei der
   die Summe der Windungszahlen einer der zweiphasigen Ausgangswicklungen annähernd gleich der der anderen der zweiphasigen Ausgangswicklungen gesetzt ist.

5. Drehwinkelerfassungseinrichtung nach einem der Ansprüche 1 bis 3, bei der
   ein Teil der Zähne (3) mindestens einer der zweiphasigen Ausgangswicklungen ohne Windungen vorgesehen ist.

6. Drehwinkelerfassungsvorrichtung nach einem der Ansprüche 2 bis 5,
   bei der $N_1$ und $N_2$ so eingestellt sind, dass sie $0.6 \leq N_1 / N_2 \leq 4.0$ erfüllen.

7. Drehwinkelerfassungsvorrichtung nach einem der Ansprüche 2 bis 6,
   bei der $N_1$ und $N_2$ so eingestellt sind, dass sie $N_1 / N_2 = 1$ erfüllen.

8. Drehwinkelerfassungsvorrichtung nach einem der vorhergehenden Ansprüche, bei der die Anzahl der Zähne (3) gleich neun ist.

9. Drehwinkelerfassungsvorrichtung nach einem der Ansprüche 1 bis 7, bei der die Anzahl der Zähne (3) gleich 12 ist.

10. Elektrische Rotationsmaschine mit einer Drehwinkelerfassungseinrichtung mit den Merkmalen eines der Ansprüche 1 bis 9.

**Revendications**

1. Dispositif de détection d'angle de rotation utilisant une variation dans la perméance de l'espace entre un rotor (1) et un stator (2), comprenant :

   un stator (2) qui est un noyau de fer ayant des dents (3) et qui est pourvu avec un enroulement de mise sous tension à une phase et d'enroulements de sortie à deux phases ; et
   un rotor (1) ayant des pôles projetés,
   **caractérisé en ce que**,
   lorsque le nombre de paires de pôles de l'enroulement de mise sous tension est représenté par N et le nombre de pôles projetés du rotor (1) est représenté par M, 2N est différent du nombre de dents du stator (2), et les nombres de tours d'enroulements de sortie à deux phases au niveau des dents respectives sont donnés par des fonctions dont chacune est une somme ou une différence entre des ondes sinusoïdales d'une harmonique spatiale de |N + M|ème ordre et d'une harmonique spatiale de |N - M|ème ordre.

2. Dispositif de détection d'angle de rotation selon la revendication 1, dans lequel les nombres de tours $N_{\alpha i}$ et $N_{\beta i}$ de la i-ème dent (3) d'un enroulement de phase $\alpha$ et d'un enroulement de phase $\beta$ en tant qu'enroulements de sortie à deux phases sont donnés par :

$$N_{\alpha i} = N_1 \cos\{(M - N) \times 2(i - 1)\pi / N_s + \theta\}$$
$$+ N_2 \cos\{(M + N) \times 2(i - 1)\pi / N_s + \theta + \xi\}$$

$$N_{\beta i} = N_1 \sin\{(M - N) \times 2(i - 1)\pi / N_s + \theta\}$$
$$+ N_2 \sin\{(M + N) \times 2(i - 1)\pi / N_s + \theta + \xi\}$$

   où $N_s$ est le nombre de dents du stator (2) et $N_1$, $N_2$, $\theta$, et $\xi$ sont des constantes arbitraires.

3. Dispositif de détection d'angle de rotation selon la revendication 2, dans lequel $\xi$ est fixé égal à une différence de phase entre des composants de flux magnétique de l'harmonique spatiale de |N + M|ème ordre et de l'harmonique spatiale de |N - M|ème ordre se produisant dans un espace.

4. Dispositif de détection d'angle de rotation selon l'une quelconque des revendications 1 à 3, dans lequel une somme des nombres de tours de l'un des enroulements de sortie à deux phases est fixée approximativement égale à celle de l'autre des enroulements de sortie à deux phases.

5. Dispositif de détection d'angle de rotation selon l'une quelconque des revendications 1 à 3, dans lequel une partie des dents (3) sont pourvues sans tour d'au moins un des enroulements de sortie à deux phases.

6. Dispositif de détection d'angle de rotation selon l'une quelconque des revendications 2 à 5, dans lequel $N_1$ et $N_2$ sont fixés de sorte à satisfaire $0,6 \leq N_1/N_2 \leq 4.0$.

7. Dispositif de détection d'angle de rotation selon l'une quelconque des revendications 2 à 6, dans lequel $N_1$ et $N_2$ sont fixés de sorte à satisfaire $N_1/N_2 = 1$.

8. Dispositif de détection d'angle de rotation selon l'une quelconque des revendications précédentes, dans lequel le nombre de dents (3) est égal à neuf.

9. Dispositif de détection d'angle de rotation selon l'une quelconque des revendications 1 à 7, dans lequel le nombre de dents (3) est égal à 12.

10. Machine rotative électrique qui comprend un dispositif de détection d'angle de rotation ayant les caractéristiques de l'une des revendications 1 à 9.

## FIG. 1

## FIG. 2

| TOOTH NUMBER | 1 | 2 | 3 | 4 | 5 | 6 | 7 | 8 | 9 | 10 | 11 | 12 |
|---|---|---|---|---|---|---|---|---|---|---|---|---|
| ENERGIZATION WINDING | 50 | 50 | -50 | -50 | 50 | 50 | -50 | -50 | 50 | 50 | -50 | -50 |
| α-PHASE WINDING | 56 | 56 | 41 | 15 | -15 | -41 | -56 | -56 | -41 | -15 | 15 | 41 |
| β-PHASE WINDING | 15 | -15 | -41 | -56 | -56 | -41 | -15 | 15 | 41 | 56 | 56 | 41 |

## FIG. 3

## FIG. 4

| TOOTH NUMBER | 1 | 2 | 3 | 4 | 5 | 6 | 7 | 8 | 9 | 10 | 11 | 12 |
|---|---|---|---|---|---|---|---|---|---|---|---|---|
| ENERGIZATION WINDING | 27 | 27 | -27 | -27 | 27 | 27 | -27 | -27 | 27 | 27 | -27 | -27 |
| α-PHASE WINDING | 71 | -71 | 0 | -71 | -71 | 0 | -71 | 71 | 0 | 71 | 71 | 0 |
| β-PHASE WINDING | -41 | -41 | -82 | 41 | -41 | 82 | 41 | 41 | 82 | -41 | 41 | -82 |

## FIG. 5

## FIG. 6

| CONVENTIONAL EXAMPLE (β-PHASE WINDING) | CONVENTIONAL EXAMPLE (α-PHASE WINDING) |

INVENTION (α-PHASE WINDING)

INVENTION (β-PHASE WINDING)

OUTPUT VOLTAGE (+ / -)

0    5    10    15    20    25    30    35    40    45

ROTOR POSITION (DEGREES (MECHANICAL ANGLE))

## FIG. 7

POSITION DETECTION ERROR (DEGREES (MECHANICAL ANGLE))

FLUX LINKAGE (Wb)

| 0.6 | 6.00E-06 |
| 0.5 | 5.00E-06 |
| 0.4 | 4.00E-06 |
| 0.3 | 3.00E-06 |
| 0.2 | 2.00E-06 |
| 0.1 | 1.00E-06 |
| 0 | 0.00E-00 |

0    90    180    270    360

PHASE DIFFERENCE ξ (DEGREES (MECHANICAL ANGLE))
BETWEEN 5TH ORDER WINDING AND 11TH ORDER WINDING

—◆—: POSITION DETECTION ERROR
-■-: FLUX LINKAGE OF OUTPUT WINDING

## FIG. 8

MECHANICAL ANGLE (DEGREES)

## FIG. 9

IN THE INVENTION, THE OUTPUT WINDINGS DETECT 5TH AND 11TH ORDER COMPONENTS EFFICIENTLY

SPATIAL ORDER

## FIG. 10

|  | PHASE |
|---|---|
| 5TH ORDER SPATIAL HARMONIC COMPONENT | -38.45 |
| 11TH ORDER SPATIAL HARMONIC COMPONENT | -125.199 |
| PHASE DIFFERENCE | -86.7 ( ≃ 270 ) |

## FIG. 11

ONLY
5TH ORDER

ONLY
11TH ORDER

INVENTION

## FIG. 12

ONLY
5TH ORDER

ONLY
11TH ORDER

INVENTION

## FIG. 13

PHASE DIFFERENCE ξ = 4π/3 (RAD)

| TOOTH NUMBER | 1 | 2 | 3 | 4 | 5 | 6 | 7 | 8 | 9 | 10 | 11 | 12 |
|---|---|---|---|---|---|---|---|---|---|---|---|---|
| ENERGIZATION WINDING | 27 | 27 | -27 | -27 | 27 | 27 | -27 | -27 | 27 | 27 | -27 | -27 |
| α-PHASE WINDING | 41 | -97 | -15 | -71 | -56 | 26 | -41 | 97 | 15 | 71 | 56 | -26 |
| β-PHASE WINDING | -41 | -26 | -56 | 71 | -15 | 97 | 41 | 26 | 56 | -71 | 15 | -97 |

PHASE DIFFERENCE ξ = 5π/3 (RAD)

| TOOTH NUMBER | 1 | 2 | 3 | 4 | 5 | 6 | 7 | 8 | 9 | 10 | 11 | 12 |
|---|---|---|---|---|---|---|---|---|---|---|---|---|
| ENERGIZATION WINDING | 27 | 27 | -27 | -27 | 27 | 27 | -27 | -27 | 27 | 27 | -27 | -27 |
| α-PHASE WINDING | 97 | -41 | 26 | -56 | -71 | -15 | -97 | 41 | -26 | 56 | 71 | 15 |
| β-PHASE WINDING | -26 | -41 | -97 | 15 | -71 | 56 | 26 | 41 | 97 | -15 | 71 | -56 |

## FIG. 14

# FIG. 15

DIRECTION OF
CURRENT

A

DIRECTION OF
MAGNETOMOTIVE FORCE

MAGNETIC FLUX GENERATED BY MAGNETOMOTIVE
FORCE AND HAVING ORDER THAT IS THE SAME
IN NUMBER AS

FIG. 16

## FIG. 17

## FIG. 18

## FIG. 19

| TOOTH NUMBER | 1 | 2 | 3 | 4 | 5 | 6 | 7 | 8 | 9 | 10 | 11 | 12 |
|---|---|---|---|---|---|---|---|---|---|---|---|---|
| ENERGIZATION WINDING | 50 | 50 | -50 | -50 | 50 | 50 | -50 | -50 | 50 | 50 | -50 | -50 |
| α-PHASE WINDING | 71 | 0 | 71 | -71 | 0 | -71 | -71 | 0 | -71 | 71 | 0 | 71 |
| β-PHASE WINDING | -41 | 82 | 41 | 41 | 82 | -41 | 41 | -82 | -41 | -41 | -82 | 41 |

*FIG. 20*

OUTPUT VOLTAGE

ROTOR POSITION
(DEGREES (MECHANICAL ANGLE))

——: α-PHASE WINDING
----: β-PHASE WINDING

## FIG. 21

## FIG. 22

| TOOTH NUMBER | 1 | 2 | 3 | 4 | 5 | 6 | 7 | 8 | 9 | 10 | 11 | 12 |
|---|---|---|---|---|---|---|---|---|---|---|---|---|
| ENERGIZATION WINDING | 50 | 50 | -50 | -50 | 50 | 50 | -50 | -50 | 50 | 50 | -50 | -50 |
| α-PHASE WINDING | 71 | -41 | 0 | -41 | -71 | 82 | 71 | -41 | 0 | -41 | -71 | 82 |
| β-PHASE WINDING | -41 | 71 | 82 | -71 | -41 | 0 | -41 | 71 | 82 | -71 | -41 | 0 |

# FIG. 23

## FIG. 24

## FIG. 25

| TOOTH NUMBER | 1 | 2 | 3 | 4 | 5 | 6 | 7 | 8 | 9 | 10 | 11 | 12 |
|---|---|---|---|---|---|---|---|---|---|---|---|---|
| ENERGIZATION WINDING | 50 | 50 | -50 | -50 | 50 | 50 | -50 | -50 | 50 | 50 | -50 | -50 |
| α-PHASE WINDING | 71 | 82 | -71 | -41 | 0 | -41 | 71 | 82 | -71 | -41 | 0 | -41 |
| β-PHASE WINDING | -41 | 0 | -41 | -71 | 82 | 71 | -41 | 0 | -41 | -71 | 82 | 71 |

## FIG. 26

ROTOR POSITION
(DEGREES (MECHANICAL ANGLE))

———: α-PHASE WINDING
- - - -: β-PHASE WINDING

## FIG. 27

## FIG. 28

| TOOTH NUMBER | 1 | 2 | 3 | 4 | 5 | 6 | 7 | 8 | 9 |
|---|---|---|---|---|---|---|---|---|---|
| ENERGIZATION WINDING | 50 | -25 | -25 | 50 | -25 | -25 | 50 | -25 | -25 |
| α-PHASE WINDING | 87 | 0 | 34 | -87 | 0 | 65 | 0 | 0 | -99 |
| β-PHASE WINDING | -50 | 0 | 94 | -50 | 0 | -77 | 100 | 0 | -17 |

# FIG. 29

ROTOR POSITION
(DEGREES (MECHANICAL ANGLE))

——: α-PHASE WINDING
----: β-PHASE WINDING

## FIG. 30

FIG. 31

FIG. 32

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62058445 B
- JP 49124508 A
- JP 2624747 B
- JP 3103487 B
- JP 3182493 B